# EUROPEAN PATENT APPLICATION

(11) **EP 4 842 047 A1**
(43) Date of publication of application: **18.11.2026**
(21) Application number: 24923270.3
(22) Date of filing: 28.08.2024
(51) Int. Cl.: H04W 28/02

(54) **ACCESS MANAGEMENT METHOD AND NETWORK ELEMENT**

(30) Priority: 07.02.2024 CN 202410175169
(71) Applicant: ZTE CORPORATION, Shenzhen, Guangdong 518057 (CN)
(72) Inventor: LIANG, Shuang, Shenzhen, Guangdong 518057 (CN); ZHU, Jinguo, Shenzhen, Guangdong 518057 (CN); LI, Zhendong, Shenzhen, Guangdong 518057 (CN); YAN, Xiaojian, Shenzhen, Guangdong 518057 (CN)
(74) Representative: Chimini, Francesco
(86) International application number: PCT/CN2024/115236
(87) International publication number: WO 2025/167060

(57) **Abstract**

provided are an access management method and a network element. The method comprises: acquiring, by means of a base station, a registration request initiated by a user equipment (UE), wherein the registration request carries a UE identifier; acquiring, by means of a CAG authorization function (CAF) or a policy control function (PCF), an allowed closed access group (CAG) list for a current public land mobile network (PLMN); and performing access management on the UE according to the CAG list.

## Description

### Cross-Reference to Related Application

The present disclosure claims the priority of Chinese Patent Application CN202410175169.4, filed on February 07, 2024 and entitled "Access Management Method and Network Element", the disclosure of which is incorporated herein by reference in its entirety.

### Technical Field

The present disclosure relates to the field of communications, and in particular to an access management method and a network element.

### Background

In 3G/4G systems, in order to enhance coverage or to provide specific services for homes, small businesses, etc., home base stations, also known as micro base stations or small base stations, were introduced. However, in 5G systems, the coverage area of base stations is slightly smaller than that of 3G and 4G base stations. Therefore, micro (small) base stations were not supported at the initial stage of 5G introduction. With the continuous development of 5G networks and the increasing adoption of 5G applications, in the R19 stage of the 3rd Generation Partnership Project (3GPP), the concept of Premises Radio Access Station (PRAS), also referred to as a micro base station, was introduced under the topics of Personal IoT Networks (PIN) and Customer Premises Networks (CPN). Micro base stations utilize higher frequencies, which improves 5G indoor coverage and offloads part of the traffic routed to macro base stations. Therefore, micro base stations can provide better voice call quality and offer improved support for mobility within enterprises, which in turn enhances the user experience for ordinary customers and increases the willingness of industry customers to adopt 5G networks. The related art draws on the micro base station management in 4G, as well as the Closed Access Group (CAG) management for non-public network base stations in 5G Non-Public Networks (NPN), to design the 5G micro base station access architecture.

The micro base station supports customer premises networks and can offload part of the traffic routed to the macro base station. However, this traffic offloading requires authorization from the owner of the micro base station. Since a micro base station may belong to a household user or an enterprise user, changes in authorization can be relatively frequent. In the related art, the method for acquiring the TAG data is not suitable for scenarios where CAG authorization changes frequently, which may affect the UE's access to the visited network.

In summary, in view of the problem in related technologies that the owner of a micro base station frequently changes the authorization state of a UE, thereby affecting the UE's access to a visited network, there is still no effective solution.

### Summary

Embodiments of the present disclosure provide an access management method and a network element, so as to at least solve the problem in the related art that the owner of a micro base station frequently changes the authorization state of a UE, thereby affecting the UE's access to a visited network.

According to an embodiment of the present disclosure, provided is an access management method, comprising: acquiring, by means of a base station, a registration request initiated by a user equipment (UE), wherein the registration request carries a UE identifier; acquiring, by means of a CAG authorization function (CAF) or a policy control function (PCF), an allowed closed access group (CAG) list for a current public land mobile network (PLMN); and performing access management on the UE according to the CAG list.

According to another embodiment of the present disclosure, provided is a network element, which is used for performing access management according to the steps in any one of the method embodiments.

According to another embodiment of the present disclosure, a computer readable storage medium is further provided, the storage medium stores a computer program, wherein the computer program is configured to execute, when being run by the processor, the operations in any one of the described method embodiments.

According to another embodiment of the present disclosure, further provided is an electronic device, comprising a memory and a processor, wherein the memory stores a computer program, and the processor is configured to run the computer program to execute the steps in any one of the method embodiments.

According to another embodiment of the present disclosure, further provided is a computer program product, comprising a computer program, wherein the computer program implements the steps of any one of the foregoing method embodiments when being run by the processor.

According to the embodiments of the present disclosure, local acquisition or dynamic acquisition of UE authorization information (CAG list) can be implemented. Compared with the technical solution in related art that authorization information is acquired from the UDM network element in the home network of the UE, the present disclosure can be better applied to micro base station scenarios, thereby solving the problem in related art that the owner of a micro base station frequently changes the authorization state of a UE, which affects the UE's access to a visited network.

### Brief Description of the Drawings

Fig. 1 is a structural diagram of a 5G system according to an embodiment of the present disclosure;
Fig. 2 is a flowchart of an access management method according to an embodiment of the present disclosure;
Fig. 3 is a schematic diagram of management of CAG authorization information in a visited network by means of a CAF according to an embodiment of the present disclosure.
Fig. 4 is a schematic diagram of updating of CSG authorization information according to an embodiment of the present disclosure;
Fig. 5 is a schematic diagram of updating of CAG information by means of an AF according to an embodiment of the present disclosure;
Fig. 6 is a schematic diagram of an access procedure for acquiring authorization information by means of a PCF according to an embodiment of the present disclosure.

### Detailed Description of the Embodiments

The embodiments of the present disclosure are described in detail with reference to the accompanying drawings and in conjunction with the embodiments.

It should be noted that the terms "first", "second" etc. in the description, claims, and accompanying drawings of the present disclosure are used to distinguish similar objects, and are not necessarily used to describe a specific sequence or order.

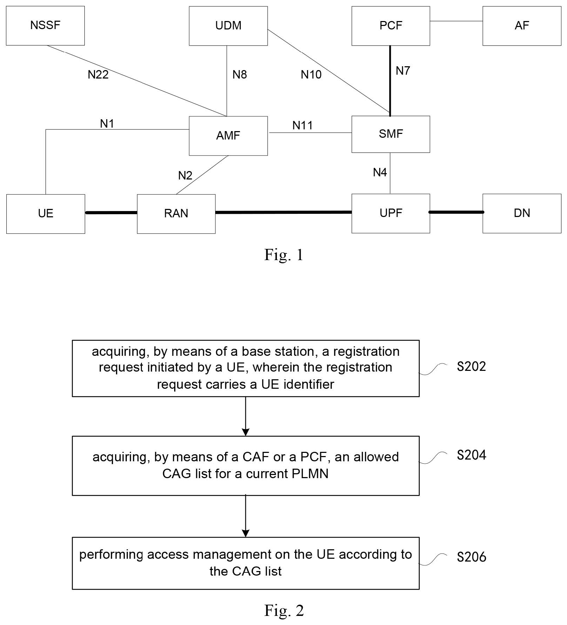

The method embodiments provided in the embodiments of the present disclosure can be applied to a 5G system. Fig. 1 is a structural diagram of a 5G system in the embodiments of the present disclosure. As shown in Fig. 1, the 5G system includes the following functional entities:
User Equipment (UE), which can access the operator's network or a customer premises network by means of a wireless base station;
Radio Access Network (RAN), wherein a base station in the RAN may be a macro base station or a micro base station;
Access and Mobility Management Function (AMF), which includes mobility management, reachability management, connection management and registration management of the UE. The AMF terminates an N2 interface to the RAN and an N1 NAS interface to the UE. For messages related to session management of the N1 and N2 interfaces, the AMF transparently transmits the messages to the SMF.

Session Management Function (SMF), which manages a session established by a user, comprising establishing, modifying and deleting a session, and also comprising establishing a user plane of a network side.

Unified Data Management (UDM), which manages UE's subscription data, application data, etc. that can be stored in a unified data repository (UDR). In the network, the UDM and the UDR may be combined. The subscription data includes access and mobility management subscription data and session management subscription data. The AMF and the SMF may acquire the subscription data from the UDMs respectively.

Policy Control Function (PCF), which may be divided into a UE-PCF, an AM-PCF and an SM-PCF according to different policies, wherein the AMF and the SMF respectively interact with the PCFs to obtain a policy, an access management policy and a session management policy of the UE.

User Plane Function (UPF), in which the SMF formulates rules, such as data detection, forwarding and monitoring, according to relevant information, such as session management subscription and a session management policy, and sends same to the UPF. As a user plane data transmission node, the UPF executes related rules specified by the SMF. Before sending the session management rules of the UE to the UPF, the SMF must first establish a node-level association connection with the UPF to exchange information such as the available port and address of the UPF. Node-level association establishment may be initiated by the SMF or the UPF.

Network Repository Function (NRF): as a functional network element for storing and querying an NF profile, the NRF may store configuration files of other network functions (NF) in a network. When another NF needs to use a certain NF but does not know the information of that NF, it can query the NRF for the NF by inputting key parameters.

In the embodiments of the present disclosure, since micro base station supports customer premises networks, part of the traffic routed to the macro base station can be offloaded. But such offloading of traffic requires the authorization of the owner of the micro base station. Since the micro base station may belong to a home user or an enterprise user, this change in authorization may be relatively frequent. Therefore, in the embodiments of the present disclosure, an access management method is designed, which provides a more localized and flexible authorization method for a micro base station user, thereby solving the problem in the related art that the a micro base station owner frequently changes the authorization state of a UE, thereby affecting the access of the UE to a visited network.

An embodiment of the present disclosure provides an access management method, which can be applied to an AMF network element. Fig. 2 is a flowchart of an access management method according to an embodiment of the present disclosure. As shown in Fig. 2, the flow comprises the following steps:
step S202: a registration request initiated by a UE is acquired by means of a base station, wherein the registration request carries a UE identifier;
step S204: an allowed closed access group (CAG) list for a current public land mobile network (PLMN) is acquired by means of a CAG authorization function (CAF) or a policy control function (PCF); and
step S206: access management is performed on the UE according to the CAG list.

The base station in the embodiment of the present disclosure may be a micro base station, but the present disclosure is not limited thereto. By means of steps S202 to S206, local acquisition or dynamic acquisition of the CAG list can be implemented. Compared with other CAG list acquisition methods, this approach is more suitable for micro base station scenarios and can address the problem of frequent changes in the authorization state of the UE.

In some embodiments, after step S202, the method further comprises step S203: access management subscription data of the UE is acquired from a unified data management (UDM) function, wherein the access management subscription data carries an indication of supporting a local acquisition function or an indication of supporting a dynamic acquisition function, the local acquisition function refers to acquiring the CAG list by means of the CAF, and the dynamic acquisition function refers to acquiring the CAG list by means of the PCF.

In some embodiments, the AMF or CAF network element may also notify the UDM of whether it supports the local acquisition function, or the AMF or PCF network element may also notify the UDM of whether it supports the dynamic acquisition function. Further, the UDM network element may negotiate, in the message, with the AMF, the PCF or the CAF by means of the supported feature.

In the present embodiment, a CAG Authorization Function (CAF) network element is designed to manage CAG information of a visited network.

In the present embodiment, step S204 contains two methods for acquiring UE authorization information (i.e. a CAG list), wherein acquiring, by means of a CAG authorization function (CAF), an allowed closed access group (CAG) list for a current public land mobile network (PLMN), i.e. the local acquisition of the CAG list may comprise the following steps:
step S2041: a CAG authorization information request carrying the UE identifier is sent to the CAF; and
step S2042: a CAG authorization information response returned by the CAF is received, wherein the CAG authorization information response comprises the CAG list.

In some embodiments, the CSG authorization information request further carries at least one of the following information: an identifier of an access and mobile management function (AMF), PLMN information of the AMF, PLMN information currently selected by the UE, current access location information of the UE, and registration area information of the UE.

Further, the CAF may include, in a response message, the allowed CAG list for the current PLMN according to the identifier of the UE. If the CAF supports multiple PLMN scenarios, the CAF can also return the allowed CAG list for the current PLMN according to PLMN information of the AMF or the PLMN information selected by the UE. To reduce the size of the delivered CAG list, the CAF may further include, in the response message, only the allowed CAG list information that is valid in the current area, according to the location information of the UE, the registration area information of the UE, and the identifier of the AMF. Optionally, for each piece of allowed CAG information, a validity time may also be set, indicating that the UE is allowed to access the CAG within a specific time period.

In some embodiments, after step S2042, the method further comprises: step S2043: subscribe to a CAG list change notification of the UE from the CAF.

In some embodiments, after step S2043, the method further comprises: in cases where the CAG list corresponding to the UE changes, receiving the CAG list change notification from the CAF, and determining an updated CAG list according to the CAG list change notification; and sending the updated CAG list to the UE.

Further, sending the updated CAG list to the UE may include the following two cases:
in cases where the GAG list corresponding to the UE changes and the UE is performing registration, sending the updated CAG list to the UE by means of a registration accept message; and
in cases where the GAG list corresponding to the UE changes and the UE has completed registration, sending the updated CAG list to the UE by means of a UE configuration update request.

In some embodiments, after step S2042, the method further comprises: determining, according to the updated CAG list, whether the UE is allowed to access the current PLMN; in cases where a determination result is yes and the base station has established a user context, notifying the base station to update the CAG list; and in cases where the determination result is no, notifying the UE to release the connection with the network, wherein in this case, there is no need to notify the base station.

In the present embodiment, step S204 contains two methods for acquiring UE authorization information (i.e. a CAG list), wherein acquiring, by means of a policy control function (PCF), an allowed closed access group (CAG) list for a current public land mobile network (PLMN), i.e. dynamic acquisition of the CAG list may comprise the following steps:
step S2046: a policy control creation message carrying the UE identifier is sent to the PCF, wherein the PCF is used for subscribing, according to the UE identifier, application data of the UE to a unified data repository (UDR), and the application data at least comprises the CAG list and the UE identifier; and
step S2047: a policy control creation response that is returned by the PCF and carries the application data is received, and the CAG list of the UE is determined from the application data.

In some embodiments, before acquiring the CAG list from the UDR, the method further comprises storing the application data to the UDR by means of an application function (AF) and a network exposure function (NEF).

In the present embodiment, the AF is configured to create, update, or delete the application data in the UDR by means of the NEF.

Further, the AF sends a create/update/delete message of application data (including the UE ID and the CAG information) to the NEF, and then the NEF sends the message to the UDR.

In the present embodiment, the externally authorized AF sends, to the 3GPP core network, the UE information that can use the CAG. The ID of the UE may be an external ID that is visible to the application. After properly mapping the external UE ID in the information sent by the AF, the NEF may send, to the UDM, the information of the UE allowed to use the CAG. If the UDM and the UDR are combined network elements, the UDM stores the application layer information. If the UDM and the UDR are separate, the UDM sends a query request to the UDR, so that the UDM verifies whether the information may be stored in the UDR. If so, the UDM needs to map the UE ID in the foregoing information to the corresponding SUPI, send an update request to the UDR, and send the foregoing received information to the UDR for storage.

Generally, the CAG information will not be included in the application data. In the present disclosure, the CAG information is dynamically created, updated and deleted in an application data manner, so that the update speed of the CAG information can be improved, and it is ensured that the UE can obtain the latest CAG information in time.

In some embodiments, the method further comprises: in cases where the application data of the UE changes and the UE has completed registration, acquiring, by the PCF, updated application data of the UDR.

Further, the UDR may actively report updated application data to the PCF, and then the PCF sends the updated application data to the AMF by means of a policy control creation response. Alternatively, the PCF may also actively acquire updated application data from the UDR. The application data herein mainly includes CAG information.

In some embodiments, the method further comprises: subscribing to the CAG list from the PCF by means of the policy control creation message or the subscribe message, wherein the policy control creation message further carries a CAG list subscribe indication, and the CAG list subscribe indication or the subscribe message is used for indicating that the PCF sends all or specified CAG lists to an access and mobile management function (AMF) when the CAG list changes.

In some embodiments, step S206 of performing access management on the UE according to the CAG list may comprise the following steps:
step S2061: whether the UE is allowed to access the current PLMN is determined according to the CAG list;
step S2062: in cases where a determination result is yes, a registration accept message is returned to the UE by means of the base station; and
step S2063: in cases where the determination result is no, a registration rejection message is sent to the UE.

According to the embodiments of the present disclosure, dynamic acquisition or local acquisition of UE authorization information (CAG list) can be implemented. Compared with the technical solution in related art that authorization information is acquired from the UDM network element in the home network of the UE, the present disclosure can be better applied to micro base station scenarios, thereby solving the problem in related art that the owner of a micro base station frequently changes the authorization state of a UE, which affects the UE's access to a visited network.

The access management method in the above embodiment will be described below based on the interaction between the network elements in the 5G system.

In an embodiment of the present disclosure, a technical solution is provided for a UE to acquire a CAG list from the local (visited network). The UE can directly acquire the CAG list from a local (visited) place, thereby reducing the information exchange with the home UDM, improving the efficiency of CAG list acquisition, adapting to the situation where the micro base station owner frequently changes the UE authorization state, and providing better timeliness of the locally acquired CAG list.

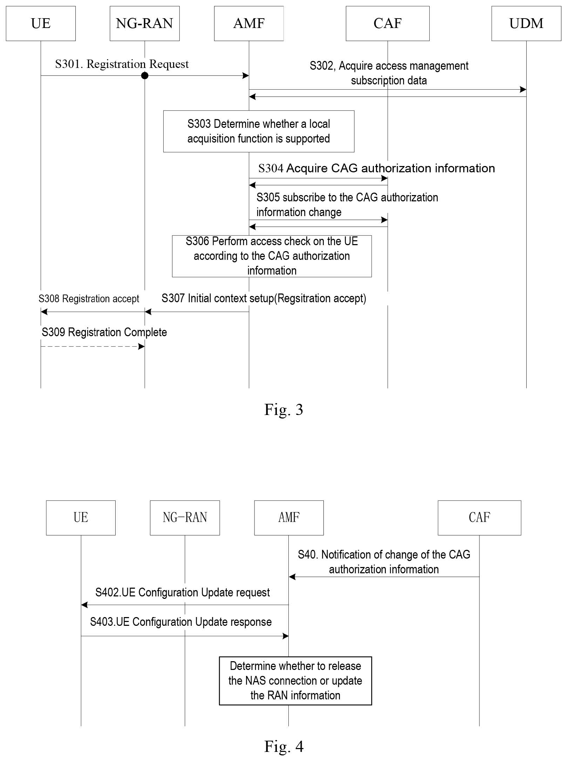

Fig. 3 is a schematic diagram of management of CAG authorization information in a visited network by means of a CAF according to an embodiment of the present disclosure. As shown in Fig. 3, the flow comprises the following steps:
step S301: a UE initiates a registration request from a current cell, and a micro base station forwards the registration request to an AMF;
step S302: the AMF acquires access management subscription data (Nudm_SubscriberDataManagement_Get) from the UDM;
step S303: the AMF determines whether a local acquisition function is supported;
step S304: the AMF acquires CAG authorization information (Ncaf_CAGAuthrization_Get) from the CAF;
step S305: the AMF subscribes to the CAG authorization information change (Ncaf_CAGAuthrization_subscription) from the CAF;
step S306: the AMF performs access check on the UE according to the CAG authorization information;
step S307: the AMF returns an initial context setup message, i.e. a registration accept message, to the micro base station;
step S308: the micro base station returns a registration accept message to the UE; and
step S309: the UE returns a registration complete message to the micro base station.

The Next Generation Radio Access Network (NG-RAN) in Fig. 3 is a basic network architecture of a 5G network, and may specifically be a micro base station, but the present disclosure is not limited thereto.

In the present embodiment, a CAG Authorization Function (CAF) network element is designed to manage CAG information of a visited network.

In the present embodiment, before step S301, a UE monitors the CAG information of the current cell by means of broadcast. If the UE has not stored the allowed CAG list for the current Public Land Mobile Network (PLMN), or if the CAG identifier broadcast by the current cell is included in the CAG list locally stored in the UE, the UE initiates the access procedure and starts performing step S301.

In the present embodiment, when the micro base station forwards the registration request to the AMF in step S301, the message sent by the micro base station to the AMF can further include all the CAG identifiers supported by the current cell.

In the present embodiment, step S302 may include: the AMF sends to the UDM a request for acquiring the access management subscription data of the UE, and receives access management subscription data returned by the UDM, wherein the access management subscription data includes an indication indicating whether the AMF is allowed to acquire the CAG list of the visited network from the local CAF (i.e. whether the local acquisition function is supported).

In some other embodiments, if the indication in the access management subscription data indicates that the local acquisition function is not supported, the AMF may directly obtain the allowed CAG list for the current PLMN from the UDM, and then perform the processing for CAG in the existing registration procedure, skipping steps S303 to S305 and directly proceeding to step S306 to perform access check according to the authorization information. If the indication in the access management subscription data indicates that the local acquisition function is supported, the access management subscription data obtained by the AMF from the UDM does not include the CAG list for the current PLMN, but only includes the above indication.

In some embodiments, the AMF or CAF network element may also notify the UDM if it supports the dynamic acquisition function. Further, the UDM network element may negotiate, in the message, with the AMF and the CAF by means of the supported features.

In the present embodiment, step S304 may comprise: the AMF queries the address of the CAF from a Network Repository Function (NRF), or directly configures the address of the CAF locally; the AMF sends to the CAF a CAG authorization information request carrying a UE identifier; and the CAF determines a corresponding CAG list according to the identifier of the UE, and returns to the AMF a CAG authorization information response carrying the allowed CAG list for the current PLMN.

In an exemplary embodiment, in addition to the UE identifier, the CAG authorization information request may further include any one or more of the following information: the identifier of the AMF, the PLMN information of the AMF (all may be included if the AMF supports multiple PLMNs), the PLMN information currently selected by the UE, the current access location information of the UE, and the registration area information of the UE.

Further, if the CAF supports multiple PLMN scenarios, the CAF can also return the allowed CAG list for the current PLMN according to PLMN information of the AMF or the PLMN information currently selected by the UE.

Further, in order to reduce the size of the delivered CAG list, the CAF may also filter out the allowed CAG list information that is valid in the current area according to the location information of the UE, the registration area information of the UE, and the identifier of the AMF. In this case, the CAG authorization information response only includes the allowed CAG list information that is valid in the current area.

In an exemplary embodiment, for each piece of allowed CAG information, a validity time may also be set, indicating that the UE is allowed to access the CAG within a specific time period.

In the present embodiment, step S305 may comprise: the AMF sends a subscription request for the CAG authorization information to the CAF, so that when a CAG list corresponding to the UE changes, the CAF notifies the AMF of the updated CAG list. By subscribing to authorization information, it is possible to adapt to scenarios where the owner of the micro base station may frequently change the authorization state for a specific UE, thereby avoiding frequent acquisition of authorization information from the UDM.

In the present embodiment, step S306 may include the AMF performing, according to the allowed CAG list obtained from the CAF, authorization verification on whether the access of the UE is allowed. If the authorization check result indicates that the access of the UE is allowed, step S307 is performed.

In the present embodiment, step S307 to step S308 may include: when the AMF determines that the access of the UE is allowed, the AMF returns a registration accept message to the UE, wherein the registration accept message includes an allowed CAG list in a current PLMN or a current registration area. The registration accept message needs to be forwarded to the UE by means of the micro base station. Further, the AMF may also include, in the N2 message sent to the micro base station, the allowed CSG list for the current PLMN. The UE stores the allowed CAG list for the current PLMN, which is received from the AMF.

In other embodiments, if the result of the authorization check in step S306 is that the access of the UE is not allowed, the AMF returns a registration refuse message to the UE, indicating that the UE is not allowed to access from the current cell due to the restriction of the CAG. Further, the registration refuse message may also include the allowed CAG list for the current PLMN or the current registration area. The UE updates and stores the allowed CAG list for the current PLMN, which is received from the AMF.

In the present embodiment, step S309 includes: after the UE updates the allowed CAG list, if the UE permits access to the CAG list, the UE replies a registration complete message to the micro base station.

In this embodiment, the UDM is usually located in the home network of the UE, while other network elements such as the AMF, the base station, and the CAF are located in the visited network of the UE. For the case where the UE accesses from a non-home network, local acquisition of the CAG list is achieved, thereby avoiding the problem that the acquisition and update of information cannot be responded to in a timely manner when the CAG list is obtained remotely from the home UDM. In particular, when the micro base station may frequently change the authorization state of the UE, the CAG list can be obtained more efficiently and in a more timely manner.

Fig. 4 is a schematic diagram of updating of CSG authorization information according to an embodiment of the present disclosure. As shown in Fig. 4, the flow includes the following steps:
step S401: the CAF notifies the AMF that the CAG authorization information has changed;
step S402: the AMF sends a UE configuration update request to the UE;
step S403: the UE returns a UE configuration update response to the AMF.

In the present embodiment, before step S401, the AMF needs to subscribe the CAG authorization information change to the CAF first by means of step S305. After the subscription, if the CAG authorization information changes, the CAF will actively send a CAG authorization information change notification to the AMF.

In the present embodiment, the CAG authorization information may be a CAG list that the UE is allowed to access, and the UE configuration update request in step S402 carries an updated CAG list.

In the present embodiment, if the UE is in a registration procedure, for example, in any of the procedures between step S301 and step S308, the AMF may directly perform step S307 and send the updated CAG list to the UE by means of a registration accept message. If the UE is not in the registration procedure, the updated CAG list can be sent to the UE by means of step S402 and step S403.

In some embodiments, after step S403, if the micro base station has established a user context, the micro base station also needs to be notified of the updated CAG list. If the UE is not allowed to access the current cell according to the updated CAG list, the AMF further needs to release a connection of a network attached storage (NAS) after notifying the UE, and in this case, it is unnecessary to notify the micro base station.

An embodiment of the present disclosure further provides a technical solution for a UE to dynamically acquire a CAG list from a UDR. In the related art, CAG authorization information is acquired by acquiring access management subscription data. In view of the situation where the owner of a micro base station frequently changes the authorization state of UEs, the present disclosure obtains CAG information by acquiring application data, thereby ensuring timely updating of the CAG information and reducing the access pressure on the UDM network element.

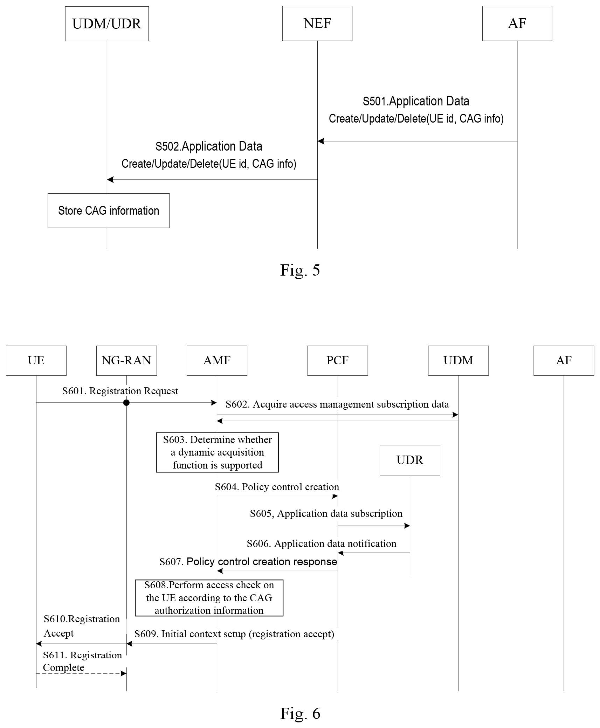

Fig. 5 is a schematic diagram of updating of CAG information by means of an AF according to an embodiment of the present disclosure. As shown in Fig. 5, the flow includes the following steps:
step S501: an AF sends a create/update/delete message (including a UE identifier and CAG information) of application data to an NEF;
step S502: the NEF sends the create/update/delete message of the application data to the UDM;
step S503: the UDM/UDR stores the CAG information.

In the present embodiment, step S501 may include: an externally authorized application function (AF) sends to a 3GPP core network, such as a network express function (NEF) network element, UE information that can use a CAG and the UE identifier. The UE identifier may be an external identifier that is visible to an application.

In the present embodiment, step S502 may include: after properly mapping the external UE ID in the information sent by the AF, the NEF may send, to the UDM, the information of the UE allowed to use the CAG.

In the present embodiment, if the UDM and the UDR are combined network elements, the UDM stores the application data. If the UDM and the UDR are separately provided, step S503 can further include: the UDM sends a query request to the UDR, so that the UDM verifies whether the information may be stored in the UDR. If so, the UDM maps the UE identifier in the foregoing information to a corresponding subscription permanent identifier (SUPI), sends an update request to the UDR, and sends the foregoing received information to the UDR for storage.

In some embodiments, if the AF allows changes to the users accessing from a specific CAG, the updated CAG information may be updated to the UDM/UDR by means of this fact-based manner (i.e., steps S501 to S503).

By means of the embodiments of the present disclosure, the CAG information stored in the UDR can be updated dynamically, thereby guaranteeing the timeliness of the update of the CAG information in scenarios where the owner of the micro base station changes the authorization state of the UE frequently.

Fig. 6 is a schematic diagram of an access procedure for acquiring authorization information by means of a PCF according to an embodiment of the present disclosure. As shown in Fig. 6, the process includes the following steps:
step S601: a UE initiates a registration request from a current cell, and a micro base station forwards the registration request to an AMF;
step S602: the AMF acquires access management subscription data (Nudm_SubscriberDataManagement_Get) from the UDM;
step S603: the AMF determines whether a dynamic acquisition function is supported;
step S604: the AMF sends a policy control creation message (Npcf_AMPolicy Control_Create) to the PCF;
step S605: the PCF sends an application data subscribe message (Nudr_DM_Subscribe) to the UDR;
step S606: the UDR returns an application data notification message (Nudr_DM_Notify) to the PCF;
step S607: the policy control creation response (Npcf_AMPolicy Control_Create response) sent by the PCF to the AMF carries authorization information;
step S608: the AMF performs access check on the UE according to the CAG authorization information;
step S609: the AMF returns an initial context setup message, i.e. a registration accept message, to the micro base station;
step S610: the micro base station returns a registration accept message to the UE; and
step S611: the UE returns a registration complete message to the micro base station.

The Next Generation Radio Access Network (NG-RAN) in Fig. 6 is a basic network architecture of a 5G network, and may specifically be a micro base station, but the present disclosure is not limited thereto.

The present embodiment is based on the foregoing embodiments, in which dynamic storage of CAG information is implemented by means of the AF in the form of application data. For scenarios where authorization information changes frequently, the CAG information stored in the UDR can be created/updated/deleted in real time. If the UE is not online when the CAG information is created/updated/deleted, the methods in steps S601 to S611 of the present embodiment may be performed when the UE comes online. In the process of the terminal accessing the network, the CAG information is directly acquired from the UDR by means of the PCF, thereby avoiding frequent access to the UDM network element.

In another embodiment, if the UE is already online and policy control has been established, steps S606 to S611 may be directly performed, wherein the UDR returns the CAG authorization information in the application data to the PCF, or the PCF acquires the CAG authorization information from the UDR.

In the present embodiment, before step S601, the UE monitors the CAG information of the current cell by means of broadcast. If the UE does not store the allowed access CAG list for the current PLMN, or the CAG identifier broadcast by the current cell is included in the CAG list stored locally in the UE, the UE initiates a registration request from the current cell. In step S601, the message sent by the micro base station to the AMF further includes all the CAG identifiers supported by the current cell.

In the present embodiment, by means of steps S602 to S603, the AMF may acquire, from the UDM, access management subscription data of the UE, which includes an indication indicating whether the AMF is allowed to dynamically acquire the allowed CAG list, i.e., whether the dynamic acquisition function is supported. If the subscription data is not allowed, the AMF may obtain the allowed CAG list of the current PLMN from the UDM, and subsequently perform the processing on the CAG in the existing registration flow, and skip other steps in the present invention. Otherwise, the subscription data obtained by the AMF from the UDM may include the CAG list for the current PLMN, or include only the foregoing indication.

In some embodiments, the AMF or PCF network element may also notify the UDM if it supports the dynamic acquisition function. Further, the UDM network element may negotiate, in the message, with the AMF and the PCF by means of the supported feature.

In some other embodiments, regardless of whether the AMF supports the dynamic acquisition function, the access management subscription data may carry the CAG list of the UE. When performing access verification based on the authorization information, the authorization information obtained from the UDM may be compared with the authorization information obtained from the UDR by means of the PCF, or the intersection of the two may be taken for authorization verification. Further, the real-time performance of the authorization information acquired by means of the PCF is better, and the priority is higher.

In some embodiments, step S604 may comprise: subscribing to the CAG list from the PCF by means of a policy control creation message carrying a CAG list subscribe indication, or subscribing to the CAG list from the PCF by means of a subscribe message, wherein the CAG list subscribe indication or the subscribe message is used for indicating that the PCF sends all or specified CAG lists to an access and mobile management function (AMF) when the CAG list changes.

Further, the policy control creation message or the subscribe message carries the UE identifier, and the PCF subscribes to application layer information of the UE from the UDR according to the UE identifier.

In some embodiments, step S605 to step S606 comprise: the PCF subscribing to the data information of the UE from the UDR. If the UDR has stored the application layer data of the UE, the UDR sends the application side data to the PCF by means of a notification message, wherein the application side data includes the CAG information written by the AF.

In some embodiments, if the UDR stores no application data of the UE, the UDR may perform access check according to the AG authorization information obtained from the access management subscription data. When CAG authorization information obtained from both methods is present at the same time, the CAG authorization information obtained from the PCF has a higher priority.

In some embodiments, step S607 can further include: the PCF generates, according to the information obtained from the UDR (the information herein may be all CAG lists or CAG lists of specified UEs), a CAG list that the specified UE is allowed to access, and returns the CAG list to the AMF.

In the present embodiment, step S608 may comprise: if the AMF obtains from the PCF the allowed CAG list for the current PLMN, determining, according to the allowed CAG list obtained from the PCF, whether the access of the UE is allowed, or performing, according to the intersection between the CAG list obtained in step S602 and the CAG list obtained in step S607, authorization verification on whether the access of the UE is allowed. If the authorization verification result indicates that the access of the UE is allowed, step S307 is performed to determine whether the access of the UE is allowed.

Further, in the following steps S609 to S611, it may be decided to send, to the UE and the micro base station, the CAG lists or the intersection of the CAG lists obtained from the PCF.

In the present embodiment, step S609 to step S610 may include: when the AMF determines that the access of the UE is allowed, the AMF returns a registration accept message to the UE, wherein the registration accept message includes an allowed CAG list in a current PLMN or a current registration area. The registration accept message needs to be forwarded to the UE by means of the micro base station. Further, the AMF may also include, in the N2 message sent to the micro base station, the allowed CSG list for the current PLMN. The UE stores the allowed CAG list for the current PLMN, which is received from the AMF.

In other embodiments, if the result of the authorization check in step S608 is that the access of the UE is not allowed, the AMF returns a registration refuse message to the UE, indicating that the UE is not allowed to access from the current cell due to the restriction of the CAG. Further, the registration refuse message may also include the allowed CAG list for the current PLMN or the current registration area. The UE updates and stores the allowed CAG list for the current PLMN, which is received from the AMF.

In the present embodiment, step S611 includes: after the UE updates the allowed CAG list, if the UE permits access to the CAG list, the UE replies a registration complete message to the micro base station.

In other embodiments, if the UDR data is updated from the AF, the PCF may directly initiate a UE policy association update to the AMF (i.e., step S607), so as to update the CAG list previously acquired by the AMF.

Further, the AMF may update the CAG lists of the UE and the micro base station by means of a registration flow or a configuration update procedure. Specifically, this can be divided into the following two scenarios: when the UE is performing registration, sending the updated CAG list to the UE by means of a registration accept message (i.e., performing steps S609 to S611); and in cases where the GAG list corresponding to the terminal changes and the terminal has completed registration, sending the updated CAG list to the terminal by means of a terminal configuration update request (reference can be made to steps S401 to S403).

An embodiment of the present disclosure further provides a network element, which is used for performing access management according to the steps in any one of the method embodiments. The network element may be an Access and Mobile Management Function (AMF) network element.

The embodiments of the present disclosure further provide a computer readable storage medium storing a computer program, wherein the computer program is configured to execute, when being run by the processor, the operations in any one of the described method embodiments.

In an exemplary embodiment, the computer readable storage medium may include, but is not limited to, any medium that can store a computer program, such as a USB flash drive, a Read-Only Memory (ROM), a Random Access Memory (RAM), a removable hard disk, a magnetic disk, or an optical disc.

The embodiments of the present disclosure further provide an electronic device, including a memory and a processor; the memory stores a computer program, and the processor is configured to run the computer program, so as to perform the steps in any one of the method embodiments.

In an exemplary embodiment, the electronic device can further comprise a transmission device and an input/output device, wherein the transmission device is connected to the processor, and the input/output device is connected to the processor.

Embodiments of the present disclosure further provide a computer program product, including a computer program, wherein the computer program implements the steps of any one of the foregoing method embodiments when being run by the processor.

For specific examples in the present embodiment, reference can be made to the examples described in the described embodiments and exemplary embodiments, and thus they will not be repeated again in the present embodiment.

Obviously, those skilled in the art should understand that the modules or steps in some embodiments of the present disclosure can be implemented by using a general computing device, and they can be integrated in a single computing device, and can also be distributed over a network consisting of a plurality of computing devices. They may be implemented by using executable program codes of the computing devices. Thus, they can be stored in a storage device and executed by the computing devices. Furthermore, in some cases, the shown or described steps may be executed in an order different from that described here, or they can be respectively implemented by individual Integrated Circuit modules, or they can be implemented by making a plurality of the modules or steps into a single Integrated Circuit module. Thus, the present disclosure is not limited to any specific hardware and software combinations.

The content above only relates to exemplary embodiments of the present disclosure, and is not intended to limit the present disclosure. For a person skilled in the art, the present disclosure may have various modifications and changes. Any modifications, equivalent replacements, improvements, etc. made within the principle of the present disclosure shall all fall within the scope of protection of the present disclosure.

## Claims

1. An access management method, the method comprising:
acquiring, by means of a base station, a registration request initiated by a user equipment (UE), wherein the registration request carries a UE identifier;
acquiring, by means of a CAG authorization function (CAF) or a policy control function (PCF), an allowed Closed Access Group (CAG) list for a current public land mobile network (PLMN); and
performing access management on the UE according to the CAG list.

2. The method according to claim 1, wherein the method further comprises:
acquiring access management subscription data of the UE from a unified data management (UDM) function, wherein the access management subscription data carries an indication of supporting a local acquisition function or an indication of supporting a dynamic acquisition function, the local acquisition function refers to acquiring the CAG list by means of the CAF, and the dynamic acquisition function refers to acquiring the CAG list by means of the PCF.

3. The method according to claim 1, wherein acquiring, by means of the CAF, the allowed CAG list for the current PLMN comprises:
sending a CAG authorization information request carrying the UE identifier to the CAF; and
receiving a CAG authorization information response returned by the CAF, wherein the CAG authorization information response comprises the CAG list.

4. The method according to claim 3, wherein the CCA authorization information request further carries at least one piece of the following information:
an identifier of an access and mobile management function (AMF), PLMN information of the AMF, PLMN information currently selected by the UE, current access location information of the UE, and registration area information of the UE.

5. The method according to claim 3, wherein the method further comprises:
subscribing to a CAG list change notification of the UE from the CAF.

6. The method according to claim 5, wherein the method further comprises:
in cases where the CAG list corresponding to the UE changes, receiving the CAG list change notification from the CAF, and determining an updated CAG list according to the CAG list change notification; and
sending the updated CAG list to the UE.

7. The method according to claim 6, wherein sending the updated CAG list to the UE comprises:
in cases where the GAG list corresponding to the UE changes and the UE is performing registration, sending the updated CAG list to the UE by means of a registration accept message; and
in cases where the GAG list corresponding to the UE changes and the UE has completed registration, sending the updated CAG list to the UE by means of a UE configuration update request.

8. The method according to claim 7, wherein the method further comprises:
determining, according to the updated CAG list, whether the UE is allowed to access the current PLMN;
in cases where a determination result is yes and the base station has established a user context, notifying the base station to update the CAG list; and
in cases where the determination result is no, notifying the UE to release the connection with the network.

9. The method according to claim 1, wherein acquiring, by means of the PCF, the allowed CAG list for the current PLMN comprises:
sending a policy control creation message carrying the UE identifier to the PCF, wherein the PCF is used for subscribing, according to the UE identifier, application data of the UE to a unified data repository (UDR), and the application data at least comprises the CAG list and the UE identifier; and
receiving a policy control creation response that is returned by the PCF and carries the application data, and determining the CAG list of the UE from the application data.

10. The method according to claim 9, wherein the method further comprises:
storing the application data to the UDR by means of an application function (AF) and a network exposure function (NEF).

11. The method according to claim 10, wherein the AF is configured to create, update, or delete the application data in the UDR by means of the NEF.

12. The method according to claim 9, wherein the method further comprises:
in cases where the application data of the UE changes and the UE has completed registration, acquiring, by the PCF, updated application data of the UDR.

13. The method according to claim 9, wherein the method further comprises:
subscribing to the CAG list from the PCF by means of the policy control creation message or the subscribe message, wherein the policy control creation message further carries a CAG list subscribe indication, and the CAG list subscribe indication or the subscribe message is used for indicating that the PCF sends all or specified CAG lists to an access and mobile management function (AMF) when the CAG list changes.

14. The method according to claim 1, wherein performing access management on the UE according to the CAG list comprises:
determining, according to the CAG list, whether the UE is allowed to access the current PLMN;
in cases where a determination result is yes, returning a registration accept message to the UE by means of the base station; and
in cases where the determination result is no, sending a registration rejection message to the UE.

15. A network element, configured to perform the access management method as claimed in any one of claims 1 to 14.

16. A computer readable storage medium storing a computer program, wherein the computer program is configured to cause, when being executed by a processor, the processor to perform the method as claimed in any one of claims 1 to 14.

17. An electronic device, comprising a memory and a processor, wherein the memory stores a computer program, and the processor is configured to execute the computer program to perform the method as claimed in any one of claims 1 to 14.

18. A computer program product, comprising a computer program, wherein the computer program, when executed by a processor, to cause the processor to perform the steps of the method as claimed in any one of claims 1 to 14.
